# EUROPEAN PATENT SPECIFICATION

(11) **EP 2 698 276 B1**
(45) Date of publication and mention of the grant of the patent: **27.05.2015**
(21) Application number: 12180665.7
(22) Date of filing: 16.08.2012
(51) Int. Cl.: B60N 2/46, B64D 11/06

(54) **Armrest assembly**
Armstützenanordnung
Ensemble d'accoudoir

(43) Date of publication of application: 19.02.2014
(73) Proprietor: Airbus (S.A.S.), 31707 Blagnac (FR)
(72) Inventor: Cossart, Christophe, 31150 BRUGUIERES (FR)
(74) Representative: Gicquel, Olivier Yves Gérard

(56) References cited:
- EP-A1- 1 510 397
- DE-A1- 3 432 084
- FR-A1- 2 318 758
- FR-A1- 2 877 615
- US-A- 5 320 414
- US-B1- 6 468 450

## Description

The invention relates to armrest assemblies for seats in passenger craft and vehicles such as aircrafts, trains, coaches or the like.

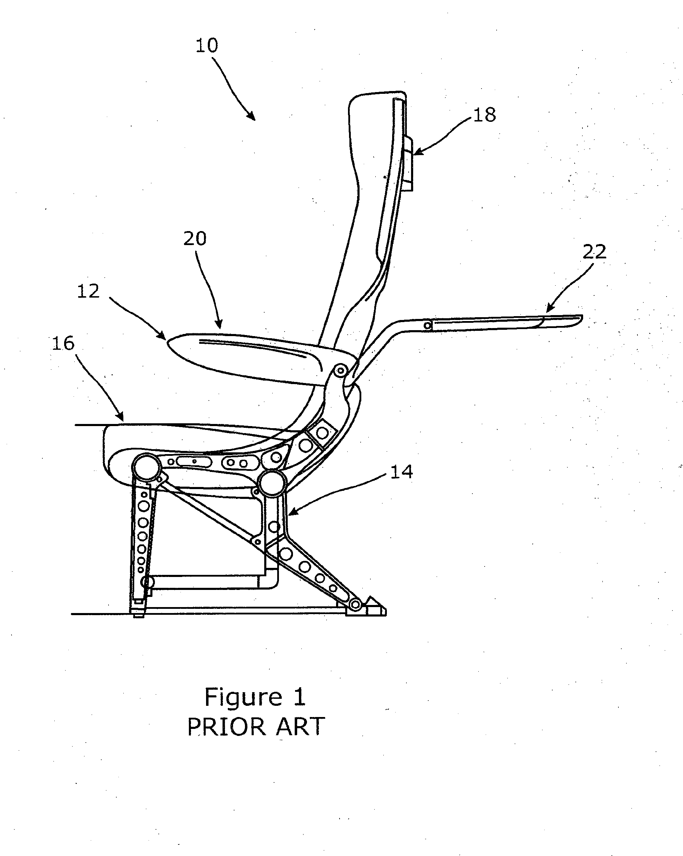

As shown in figure 1, seats 10 within aircrafts comprise armrests 12 forming part of an armrest assembly. The armrest 12 is pivotally attached to a frame 14 of the seat, having a seat base 16 and a seat back 18 mounted thereon. The armrest 12 is usually moveable between an upright position (not shown), substantially parallel to the seat back 18, and a down position as shown in figure 1, substantially parallel to the seat base 16. The armrest 12, when arranged in the down position, has a resting surface 20 having a fixed width on which passengers may rest their arms. A tray table 22 also shown in figure 1 is arranged to be used by a passenger seated in a seat (not shown) behind the seat 10 but is not an armrest surface.

Some documents related to the automotive industry, as the published French patent application FR287765 or the US patent 6,468,450, describe armrest assemblies comprising a mechanism to make the armrest movable so as to be adaptive to different positions. However, these mechanisms cannot be adapted to the space constraints in aircraft cabins.

It is an object of this invention to provide an improved armrest assembly.

According to the first aspect of the invention there is provided an armrest assembly comprising a mounting portion and an armrest having a body, the body comprising two elongate members, said two elongate members having each a first resting surface and a second resting surface, each elongate member being attached to the body by a guide pin at least at one end, said guide pin being housed within a track on the mounting portion, each elongate member being arranged to move with a combination of a translation and a rotation from a first configuration in which the first resting surface is useable to a second configuration in which the second resting surface is useable.

According to a second aspect of the invention there is provided a seat assembly comprising a frame having a first seat mounted thereon, the first seat comprising a seat base and a seat back, and an armrest assembly according to the first aspect of the invention mounted on the frame at a point adjacent the seat.

According to a third aspect of the invention there is provided an aircraft fuselage comprising a cabin having a plurality of seat assemblies according to the second aspect of the invention. Such seat assemblies installed in an aircraft are particularly advantageous for passengers desiring armrests with two alternative armrest surfaces for example having different widths in one unit due to space and weight constraints.

The invention will now be described by way of examples with reference to the accompanying drawings, in which:-
Figure 1 is a side elevation of a passenger seat for an aircraft according to the prior art;
Figure 2 is a perspective view of a row of adjoined seats including armrests according to an alternative embodiment not claimed;
Figure 3 is a perspective view of an armrest from fig 2;
Figure 4 is a cross-section of an armrest of figure 3 on line IV-IV showing a locking mechanism;
Figure 5 is a view similar to figure 3 showing an armrest in accordance with the present invention; and
Figure 6 is a cross-section of the armrest of figure 5 taken on line VI-VI.

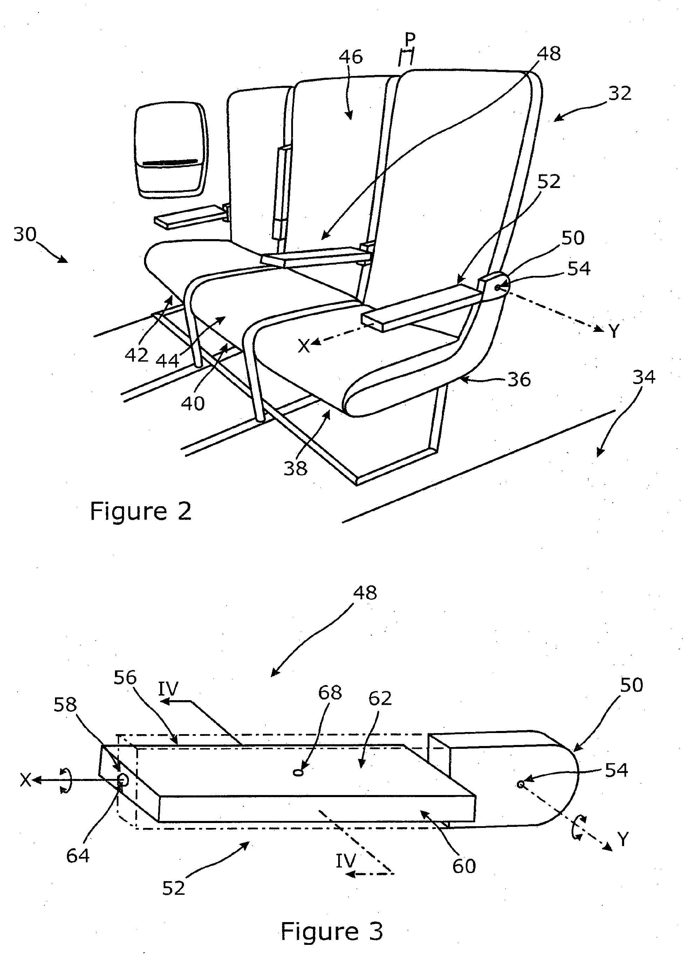

The alternative embodiment described in relation to figures 2 to 4 is not part of the present invention.

There is shown in Figure 2, a cabin 30 of a commercial aircraft fuselage in which a plurality of seat assemblies 32 are located. Although not shown, the seat assemblies 32 are arranged in rows often separated by an aisle 34. Each seat assembly 32 comprises a frame 36 having a first seat 38 mounted thereon. A second seat 40 is mounted onto the frame 36 adjacent the first seat 38. A third seat 42, in this example, is mounted onto the frame 36 adjacent the second seat 40. Each seat is separated from an adjacent seat by a pitch or seat space (P). Each seat comprises a seat base 44 and a seat back 46.

The seat assembly 32, in this example, has four armrest assemblies 48; one adjacent the seat back of the first seat 38, one intermediate the seat backs of the first seat 38 and the second seat 40, one intermediate the seat backs of the second seat 40 and third seat 42 and one adjacent the seat back of the third seat 42.

Each armrest assembly 48 comprises a mounting portion 50 and an armrest 52, having a body 56. Each armrest assembly 48 is mounted onto the frame 36 at a point adjacent each seat back 46. The mounting portion 50 is pivotally mounted, about a transverse (Y) axis perpendicular to a longitudinal axis of the aircraft fuselage, to the frame 36 by means of a fastener 54.

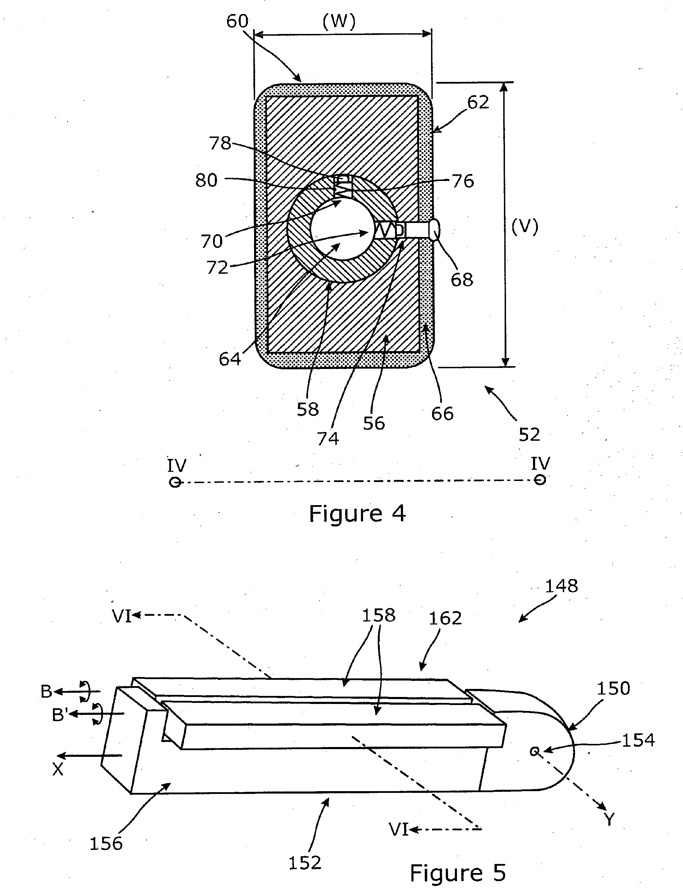

The body 56, as shown in Figure 3, has an elongated shape having a substantially rectangular cross section with a first resting surface 60 and a second resting surface 62. A cushion coating 66 surrounds the body 56 as shown in Figure 4. The first resting surface 60 has a width (W) and the second resting surface 62 has a different width (V). The width (W) is less than the seat pitch (P) (shown only in figure 2) and the width (V) is greater than the seat pitch (P). The width (W) is preferably about 38mm (1.5 inches) and the width (V) is preferably between about 76mm and about 102mm (about 3 to about 4 inches).

The body 56 further comprises a first pivot structure 58 in the form of a socket, as shown in figure 3. The mounting portion 50 comprises a second pivot structure 64 in the form of a spigot arranged to mate with the pivot structure 58 of the body 56.

A locking mechanism, shown Figure 4, comprising a push button 68 in combination with a first poppet 70 and a second poppet 72 is arranged between the body 56 and the mounting portion 50. The push button 68 is located in a hole 74 passing through the body 56 and the cushion coating 66 communicating with the second resting surface 62 and the pivot structure 58. Each poppet comprises a spring 76 loaded with a head 78. Each poppet is located in a recess 80 within the spigot. The first poppet 70 is directed towards the first resting surface 60 and the second poppet 72 is directed towards the second resting surface. In the first configuration, the push button is in line with the second poppet whereby the head 78 abuts the pushbutton at a point within the hole 74.

As shown in figure 2 and in a known manner, the armrest assembly 48 is moveable between an upright position and a down position. In the upright position, the armrest 52 is substantially parallel to the seat back 46 and in the down position the armrest 52 is substantially parallel to the seat base 44.

When the armrest assembly 48 is in the down position, the armrest 52 is pivotable between a first configuration and a second configuration, as shown in Figure 3. In the first configuration, the first resting surface 60 is usable as an armrest. In the second configuration the second resting surface 62 is usable as an armrest. In pivoting the armrest 52 between the first and second configurations, the push button 68 is pressed which compresses the spring 76 of the second poppet 72. When the head 78 of the second poppet 72 is in line with the spigot's perimeter, the armrest 52 may be pivoted about the longitudinal (X) axis until the push button 68 is in line with the second poppet 72. When the push button 68 is released, the head 78 of the first poppet 70 enters into the hole 74 in the body 56, thus locking the armrest 52 in the second configuration. Conversely, the armrest 52 can be pivoted about the longitudinal (X) axis by reversing the operations outlined above.

The first resting surface 60 width (W) of about 38mm (1,5 inches) is considered to be the minimum acceptable width for a single passenger's comfort. The second resting surface 62 width (V) of between about 76mm and about 102mm (about 3 to about 4 inches) is considered to be acceptable for two neighbouring passengers using the armrest 52. Having both the first configuration and the second configuration allows either a single passenger or two neighbouring passengers to optimise the comfort associated with the armrest 52.

The seat pitch (P) being smaller than with width (V) of the second resting surface 62 and larger than the width (W) of the first resting surface 60 allows for adjacent seats 38,40,42 to be wider than conventional seats.

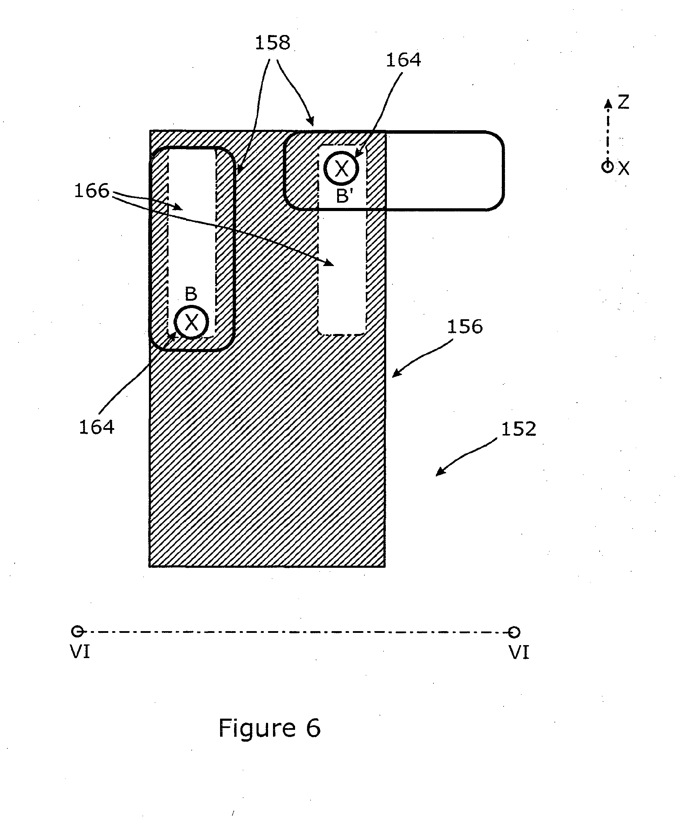

The present invention is shown in Figures 5 and 6, a pair of elongate members 158 is housed within the body 156, both of which extend parallel with the longitudinal (X) axis. Each elongate member 158 is attached to the body 156 by a guide pin 164 at least at one end. The elongate members 158 are substantially rectangular in cross section having a first resting surface and a second resting surface. A pair of body axes (B, B') is defined by the guide pins 164. The body axes are substantially parallel to the longitudinal (X) axis. A pair of tracks 166 are provided on the body 156 extending vertically (Z). The guide pins 164 are located in the pair of tracks 166.

The first and second elongate members are movable between a first configuration (shown in fig. 6; left side) and a second configuration (shown in figure 5 and in fig. 6; right side). In the first configuration, the two first resting surfaces of the elongate members form a first resting surface 160 usable as an armrest by a single passenger. The passenger translates the elongate members 158 within the pair of tracks 166. When the guide pins 164 abut the track's uppermost surface, the elongate members are pivoted away from one another into a second configuration. In the second configuration, the two second resting surfaces of the elongate members form a second resting surface 162. Hence, each elongate member is arranged to move with a combination of a translation and a rotation from the first configuration to the second configuration.

In another variant (not shown in the figures), functional systems are included onto resting surfaces, such as volume controls for music systems, in-flight entertainment panel controls, electronic controls for temperature or lighting, etc. Having some controls on one resting surface and another set of controls on a second resting surface would allow a passenger, sitting alone or with a neighbour, to select one of the sets of controls by pivoting the armrest. Alternatively, all controls may be arranged on one resting surface and the other resting surface may be clear of controls and arranged on the opposite face of the body. In that way, the user may orient the armrest so that the controls face the seat when not in use to minimise the risk of inadvertent operation.

## Claims

1. An armrest assembly (48) comprising a mounting portion (50) and an armrest (52) having a body (56), **characterised in that** the body (56) comprising two elongate members (158, 162) adapted to be housed in the body, said two elongate members having each a first resting surface and a second resting surface, each elongate member (158, 162) is attached to the body (56) by a guide pin (164) at least at one end, said guide pin being housed within a track (166) on the mounting portion, each elongate member being arranged to move with a combination of a translation and a rotation from a first configuration in which the first resting surface is useable to a second configuration in which the second resting surface is useable.

2. The armrest assembly (48) according to claim 1 wherein the body (56) is pivotally mounted to the mounting portion (50).

3. The armrest assembly (48) according to claim 2 wherein a locking mechanism (68, 70, 72) is arranged between the body (56) and the mounting portion (50).

4. The armrest assembly (48) according to claim 2 or claim 3 wherein the body (56) has a pivot structure (58), arranged to mate with a second pivot structure (64) provided on the mounting portion (50).

5. The armrest assembly (48) according to claim 4 wherein the first pivot structure (58) is a socket and the second pivot structure (64) is a spigot.

6. A seat assembly (32) comprising a frame (36) having a first seat (38) mounted thereon, the first seat (38) comprising a seat base (44) and a seat back (46), and an armrest assembly (48) according to any of claims 1 to 5 mounted on the frame (36) at a point adjacent the seat.

7. The seat assembly according to claim 6 wherein the seat assembly further comprises a second seat mounted to the frame adjacent the first seat such that the armrest assembly is mounted to the frame intermediate the first and second seats, the seats having a pitch (P) between them wherein the pitch (P) is less than the width (V) of the second surface but larger than the width (W) of the first surface.

8. An aircraft fuselage comprising a cabin (30) having a plurality of seat assemblies (32) according to any of claims 6 to 7 installed therein.

## Patentansprüche

1. Armlehnenanordnung (48), umfassend einen Montageabschnitt (50) und eine Armlehne (52), die einen Körper (56) hat, **dadurch gekennzeichnet, dass** der Körper (56) zwei längliche Glieder (158, 162) umfasst, die geeignet sind, im Körper untergebracht zu sein, wobei die zwei länglichen Glieder jeweils eine erste Ruhefläche und eine zweite Ruhefläche haben, wobei jedes längliche Glied (158, 162) mindestens an einem Ende über einen Führungsstift (164) am Körper (56) angebracht ist, wobei der Führungsstift in einer Spur (166) am Montageabschnitt untergebracht ist, wobei jedes längliche Glied so angeordnet ist, dass es sich in einer Kombination aus einer Translation und einer Drehung aus einer ersten Konfiguration, in der die erste Ruhefläche verwendbar ist, zu einer zweiten Konfiguration, in der die zweite Ruhefläche verwendbar ist, bewegt.

2. Armlehnenanordnung (48) nach Anspruch 1, wobei der Körper (56) schwenkbar am Montageabschnitt (50) montiert ist.

3. Armlehnenanordnung (48) nach Anspruch 2, wobei ein Verriegelungsmechanismus (68, 70, 72) zwischen dem Körper (56) und dem Montageabschnitt (50) angeordnet ist.

4. Armlehnenanordnung (48) nach Anspruch 2 oder 3, wobei der Körper (56) eine Schwenkstruktur (58) hat, die dazu angeordnet ist, mit einer am Montageabschnitt (50) vorgesehenen zweiten Schwenkstruktur (64) zusammenzupassen.

5. Armlehnenanordnung (48) nach Anspruch 4, wobei die erste Schwenkstruktur (58) eine Muffe und die zweite Schwenkstruktur (64) ein Zapfen ist.

6. Sitzanordnung (32), umfassend einen Rahmen (36), der einen ersten daran montierten Sitz (38) hat, wobei der erste Sitz (38) eine Sitzbasis (44) und eine Sitzlehne (46) und eine Armlehnenanordnung (48) nach einem der Ansprüche 1 bis 5 umfasst, die an einer dem Sitz benachbarten Stelle am Rahmen (36) montiert ist.

7. Sitzanordnung nach Anspruch 6, wobei die Sitzanordnung ferner einen zweiten Sitz umfasst, der dem ersten Sitz benachbart am Rahmen montiert ist, so dass die Armlehnenanordnung zwischen dem ersten und dem zweiten Sitz am Rahmen montiert ist, wobei die Sitze zwischen sich einen Abstand (P) haben, wobei der Abstand (P) geringer als die Breite (V) der zweiten Fläche, aber größer als die Breite (W) der ersten Fläche ist.

8. Flugzeugrumpf, umfassend eine Kabine (30) mit mehreren darin installierten Sitzanordnungen (32) nach einem der Ansprüche 6 bis 7.

## Revendications

1. Ensemble d'accoudoir (48) comprenant une portion de fixation (50) et un accoudoir (52) ayant un corps (56), **caractérisé en ce que** le corps (56) comprend deux organes allongés (158, 162) prévus pour être reçus dans le corps, lesdits deux organes allongés ayant chacun une première surface d'appui et une deuxième surface d'appui, chaque organe allongé (158, 162) étant attaché au corps (56) par une goupille de guidage (164) au moins à une extrémité, ladite goupille de guidage étant reçue à l'intérieur d'une glissière (166) sur la portion de fixation, chaque organe allongé étant prévu pour se déplacer suivant une combinaison d'une translation et d'une rotation depuis une première configuration dans laquelle la première surface d'appui peut être utilisée dans une deuxième configuration dans laquelle la deuxième surface d'appui peut être utilisée.

2. Ensemble d'accoudoir (48) selon la revendication 1, dans lequel le corps (56) est monté de manière pivotante sur la portion de fixation (50).

3. Ensemble d'accoudoir (48) selon la revendication 2, dans lequel un mécanisme de verrouillage (68, 70, 72) est disposé entre le corps (56) et la portion de fixation (50).

4. Ensemble d'accoudoir (48) selon la revendication 2 ou la revendication 3, dans lequel le corps (56) présente une structure de pivot (58) prévue pour s'accoupler avec une deuxième structure de pivot (64) prévue sur la portion de fixation (50).

5. Ensemble d'accoudoir (48) selon la revendication 4, dans lequel la première structure de pivot (58) est un raccord femelle et la deuxième structure de pivot (64) est un raccord mâle.

6. Ensemble de siège (32) comprenant un cadre (36) ayant un premier siège (38) monté sur celui-ci, le premier siège (38) comprenant une base de siège (44) et un dossier de siège (46) et un ensemble d'accoudoir (48) selon l'une quelconque des revendications 1 à 5 monté sur le cadre (36) en un point adjacent au siège.

7. Ensemble de siège selon la revendication 6, dans lequel l'ensemble de siège comprend en outre un deuxième siège monté sur le cadre en position adjacente au premier siège de telle sorte que l'ensemble d'accoudoir soit monté sur le cadre entre le premier et le deuxième siège, les sièges ayant un pas (P) entre eux le pas (P) étant inférieur à la largeur (V) de la deuxième surface mais étant supérieur à la largeur (W) de la première surface.

8. Fuselage d'aéronef comprenant une cabine (30) ayant une pluralité d'ensembles de sièges (32) selon l'une quelconque des revendications 6 et 7 installés dans celle-ci.
